# EUROPÄISCHE PATENTSCHRIFT

(11) **EP 1 608 603 B1**
(45) Veröffentlichungstag und Bekanntmachung des Hinweises auf die Patenterteilung: **10.08.2011**
(21) Anmeldenummer: 04725043.6
(22) Anmeldetag: 01.04.2004
(51) Int. Cl.: C04B 28/02, C04B 28/04, C04B 16/08, C04B 38/02, C04B 38/10, C04B 20/00

(54) **LEICHTBETON UND VERFAHREN ZU SEINER HERSTELLUNG**
LIGHTWEIGHT CONCRETE AND METHOD FOR THE PRODUCTION THEREOF
BETON LEGER ET PROCEDE DE FABRICATION ASSOCIE

(30) Priorität: 01.04.2003 DE 10314879
(43) Veröffentlichungstag der Anmeldung: 28.12.2005
(73) Patentinhaber: Heinrich, Jörg, 99310 Görbitzhausen (DE)
(72) Erfinder: HEINRICH, Jörg, 99310 Görbitzhausen WT. (DE); ERTEN, Ercan, 06667 Weissenfels (DE)
(74) Vertreter: Pfister, Stefan Helmut Ulrich
(86) Internationale Anmeldenummer: PCT/EP2004/003458
(87) Internationale Veröffentlichungsnummer: WO 2004/087605

(56) Entgegenhaltungen:
- WO-A-93/10972
- WO-A-03/091510
- US-A- 3 062 669
- US-A- 3 867 159
- US-A1- 2002 178 971
- US-B1- 6 485 561
- DATABASE WPI Section Ch, Week 200146 Derwent Publications Ltd., London, GB; Class A93, AN 2001-426256 XP002287392 & CN 1 293 165 A (FARONG AGRIC & IND SCI & TRADE CO LTD) 2. Mai 2001 (2001-05-02)
- DATABASE WPI Section Ch, Week 200031 Derwent Publications Ltd., London, GB; Class A93, AN 2000-362918 XP002287393 -& RU 2 132 315 C1 (AIRAPETOV G A) 27. Juni 1999 (1999-06-27)
- DATABASE WPI Section Ch, Week 200147 Derwent Publications Ltd., London, GB; Class L02, AN 2001-439879 XP002287394 -& RU 2 169 719 C1 (FROLOV N V) 27. Juni 2001 (2001-06-27)
- DATABASE WPI Section Ch, Week 198227 Derwent Publications Ltd., London, GB; Class A93, AN 1982-57017E XP002287395 -& SU 863 545 A (LENGD ENG-CONS INST) 15. September 1981 (1981-09-15)

## Beschreibung

Die Erfindung betrifft ein Verfahren zur Herstellung von Leichtbeton mit einer Trockenrohdichte von 200 bis 600 kg/m³.

Als Leichtbeton wird Beton mit einer Rohdichte von 800 bis 1.900 kg/m³ Beton bezeichnet. Dieser Leichtbeton hat ein poröses Gefüge. Er soll im Gegensatz zu Schwerbeton möglichst viele kleine Luftporen enthalten. Nach dem Stand der Technik war es dazu bekannt, poröse Zuschlagstoffe zu verwenden beziehungsweise einen entsprechenden Kornaufbau zu wählen, der einen großen Hohlraumgehalt ergibt. Es ist auch bekannt, einen Leichtbeton durch künstliche Erzeugung von Luftzellen in der aus feinkörnigen Zuschlagstoffen bestehenden Betonmasse herzustellen. Man unterscheidet bei derartigen Zellenbetonen Gas- und Schaumbeton.

Zur Erzielung von Gasbeton werden beispielsweise der zähflüssigen Feinbetonmasse Aluminiumpulver, Kalziumkarbitpulver oder Chlorkalk und Wasserstoffperoxyd beigegeben. Das sich entwickelnde Gas bläht den Frischbeton auf. Dabei muß die Erstarrungszeit des Kalkgemisches mit der Gasbildung in Einklang gebracht werden, da sonst die Masse wieder zusammenfällt und keine homogene Porigkeit erzielt wird. Zur Herstellung von Schaumbeton wird der Masse ein Schaumbildner beigemischt, zum Beispiel fertiger Schaum aus Feuerlöschern.

Es ist auch bekannt Styroporbeton herzustellen. Dieser Styroporbeton wird unter Zugabe von Styroporgranulat hergestellt.

Derartige Leichtbetone (Styroporbetone) wurden von allen Anwendern massenmäßig dosiert und gemischt. Es war weiterhin vorgesehen, Sand zur Herstellung als wichtige und unverzichtbare Komponente einzusetzen. Durch die massenmäßige Verwendung der Zuschlagstoffe bei der Mischung und den Zusatz von Sand, werden dabei Rohdichten von minimal 400 bis 500 kg/m³ erreicht. Bei der beschriebenen Vorgehensweise in der Herstellung entstehen Schwundrisse während des Abbindezeitraumes, welche derzeit nicht als beherrschbar gelten. Erfahrungen an Bauwerken haben gezeigt, daß nicht nur während des Abbindezeitraumes des Materials ein starkes Schwundverhalten zu verzeichnen ist. Es ergab sich auch, daß noch nach mehr als zwei Jahren eine starke Rißbildung im hergestellten und verarbeiteten Material zu verzeichnen waren. Aus diesem Grund wurde bisher Leichbeton erfolgreich mit Rohdichten ab 850 kg/m³ eingesetzt, bei denen es nach vorliegenden derzeitigen Erkenntnissen zu keiner Rißbildung kommt beziehungsweise die Rißbildung durch den Einsatz von Bewehrungsstahl im Material vermieden wird.

Es ist auch ein wärme- beziehungsweise schallisolierender Baustoff bekannt, welcher aus einer oder zwei Schalen aus Dämmstoff besteht und sich dadurch auszeichnet, daß die Schale einseitig oder beidseitig innerhalb eines Fachwerks oder Rahmens angebracht ist und die Schale aus Polystyrolbeton besteht. Dabei handelt es sich zwar um einen Füllstoff mit einer Rohdichte von 200 kg/m³ bis 550 kg/m³. Dieser Styroporfüllstoff hat insbesondere keine eigenen statisch tragenden Eigenschaften, er wird zum Beispiel im Fachwerk verbaut. Dieser Polystyrolbeton wird beispielsweise mittels sehr schneller Mischer mit einer Umfangsgeschwindigkeit von 3 m/Sek. erhalten. Im äußeren Bereich entstehen aufgrund des schnellen Mischverfahrens sehr dichte, aber auch inhomogene Strukturen, die eine gute Sichtoberfläche ergeben. Der so hergestellte Leichtbeton ist speziell für die Ausfachung von Fachwerken geeignet. Er ist auf auf der Innenseite beispielsweise mittels einer Holzbauplatte geschützt. WO 93/10972 und US 3,867,159 beschreiben Verfahren zur Herstellung von Leichtbeton.

Die Aufgabe der Erfindung ist es ein Verfahren zur Herstellung von Leichtbeton zur Verfügung zu stellen.

Erfindungsgemäß wird diese Aufgabe durch ein Verfahren gemäß den Ansprüchen 1, 2, 3 oder 4 gelöst. Durch die Zugabe von Mikrofasern wird auch die zuvorstehende Mischung dazu angeregt, eine Bewehrungsfunktion der Fasern in der Zementsteinmatrix als Mikrobewehrung im Material zu bilden. Dies erfolgt im Material innerhalb dieser Prozeßphasen. Dadurch wird insbesondere der Rißbildung und dem Schwindverhalten der aus dem Stand der Technik bekannten Leichtbetone der gleichen Trockenrohdichte entgegengewirkt. Die Mikrofasern und Porenbildner begünstigen den Aufbau einer Betonmatrix, die dann zu den gewünschten Ergebnissen eines Leichtbetons führt, der insbesondere auch als statisch belastbares Wandbauelement und gegebenenfalls als statisch selbsttragendes Dachelement einsetzbar ist. Die Mischung aus Wasser, Zement, Fließmittel, Schaummittel beziehungsweise Porenbildnern und Mikrofasern bringt im Gegensatz zu allen bisher bekannten Gemischen, die auch als Leichtbeton bezeichnet wurden, erstmalig die Eigenschaft mit sich, daß ein statisch belastbares Bauelement zur Verfügung gestellt wird. Die Mikrofasern in Kombination mit Porenbildnern führen zu einer ausreichenden Festigkeit und gleichzeitig zu einer Gewichtsersparnis des Leichtbetons, so daß die oben erwähnten Trockenrohdichten von 200 bis 600 kg/m³ erreicht werden und trotzdem die statische Belastbarkeit gewährleistet ist.

Die Aufgabe der Erfindung wird auch gelöst durch ein Verfahren gemäß den Ansprüchen 1, 2, 3 oder 4. Bei dem Leichtbeton ist noch der Vorteil gegeben, daß in diesem zur weiteren Verringerung der Masse und damit auch der Trockenrohdichte gekörnter Styropor Bestandteil der Mischung ist. Auch bei diesem Leichtbeton treten die Schwind- und Rißbildungseffekte der bisher bekannten Leichtbetone insbesondere der Leichtbetone mit Styroporanteil nicht mehr auf. Durch die Hinzugabe von Styropor in den erfindungsgemäßen Leichtbeton wird zusätzlich zu dem Porenbildner jetzt ein weiterer Porenbildner hinzugefügt, der insbesondere relativ preiswert zu erhalten ist und der gemeinsam mit den Tesiden beziehungsweise Porenbildnern eine hervorragende Porigkeit des Leichtbetons gewährleistet. Der Styropor als Zugabe zu dem Leichtbeton zerstört nicht die durch die Porenbildner gebildeten Poren, sondern bildet eine homogene Verbindung mit diesen. Der Styropor wirkt puffernd aufgrund der äußeren, insbesondere kugelförmigen, nicht scharfkantigen und bereits porigen und elastischen Struktur. Dem gegenüber sind die bisher eingesetzten Zuschlagstoffe scharfkantig und zerstören, die durch die Porenbildner gebildeten Hohlräume. Auch der so erhaltene Leichtbeton ist von einer geringen Trockenrohdichte und statisch gut belastbar.

Es ist daher günstig, daß im Gegensatz zum Stand der Technik der als zwingend vorgesehener Zusatz von Sand, Dolomit, Kalkpulver oder anderen mineralischen Zuschlagstoffe wie Asche, Hochofenschlacke, Flugasche, Schaumglas, Blähglas, Blähschiefer, Blähton, Hüttenbims, Naturbims oder dergleichen komplett vermieden wird oder darauf weitestgehend verzichtet wird. Dies führt zu einem Leichtbeton, der die aus dem Stand der Technik bekannten nachteiligen Eigenschaften des Schwindens und der Rißbildung des Betons nicht mehr besitzt. Dadurch werden die bisher nicht beherrschbaren Probleme des Schwindverhaltens und der damit verbundenen Abbindeschwindens insgesamt nunmehr beherrscht. Es sind dadurch auch Bauelemente jeglicher Größenordnung und insbesondere auch in der Großproduktion möglich. Die aus dem Stand der Technik bisher verwendeten mineralischen Zuschlagstoffe zerschlagen die durch die Porenbildner gebildeten Hohlräume und führen dadurch zum Zusammenfall derselben. Durch die Abwesenheit dieser Zuschlagstoffe besteht auch dieses Problem nicht mehr. Gerade der Einsatz von leichten Styropor an Stelle der schweren Zuschlagstoffe wird ein leichter, aber auch statisch belastbarer Leichtbeton erreicht. Dies geht einher mit guten Schall- und Wärmedämmeigenschaften aufgrund der porösen Grundstruktur.

Ein derartiger Leichtbeton ist insbesondere ein sehr homogener Baustoff und besitzt tragende Eigenschaften. Dieser Baustoff ist beispielsweise als Wandbaustoff und als Dachelement verwendbar. Er ist sowohl in Plattenform als Betonfertigteil als auch als Baustein zum Ausmauern beziehungsweise zur Herstellung von Wänden geeignet. Die Energiebilanz eines so hergestellten Leichtbetons ist äußerst günstig, da er auf die bisher zum Einsatz kommenden mineralischen Zuschlagstoffe komplett verzichtet. Damit wird beispielsweise der Energieaufwand, der zur Herstellung dieser Zuschlagstoffe erforderlich ist, nicht mehr erforderlich, was die Herstellung des Leichtbetons sehr günstig gestaltet.

Eine vorteilhafte Weiterbildung des zuerst genannten Leichtbetons ist hergestellt aus einer Mischung von 50 l bis 350 1 Wasser, bevorzugt 80 1 bis 250 l, 110 bis 580 kg Zement, bevorzugt 180 bis 560 kg, ca. 0,9 bis 2,1 kg Fließmittel, bevorzugt 1,5 kg, 60 1 bis 210 l Schaummittel beziehungsweise Porenbildner, bevorzugt 100 1 bis 150 l in Form von Schaum und 0,3 bis 1,0 kg Mikrofasern, bevorzugt 0,5 bis 0,7 kg für 1,2 bis 2,0 m³ Leichtbeton. Mittels einer derartigen Mischung lassen sich Leichtbetone mit einer Trockenrohdichte von 200 bis 600 kg/m³ herstellen. Die Zugabe der einzelnen Bestandteile beziehungsweise das Mischungsverhältnis bestimmt die spätere Trockenrohdichte des Leichtbetons. Dies richtet sich im Wesentlichen nach dem vorgesehenen Einsatzzweck. Ein derartiger Beton besitzt ebenfalls die positiven Eigenschaften, welche von einem Leichtbeton erwartet werden. Insbesondere besitzt er auch eine sehr gute Wärmedämmung und ist auch an unterschiedliche Kontinentalklimata anderer Länder anpaßbar. Je nach Kontinentalklima wird dazu eine Flexibilität in Bezug auf die verwendeten Wassermengen und auch an der jeweils vorliegenden Zementqualität erreicht. Dabei kann es notwendig sein, entsprechend der einzelnen Gegebenheiten, an dem jeweiligen Standort die Produktion eines derartigen Leichtbetons den örtlichen Verhältnissen anzupassen, was erfindungsgemäß jetzt möglich ist.

Eine vorteilhafte Weiterbildung der erfindungsgemäßen Lösung zeichnet sich dadurch aus, daß der Leichtbeton hergestellt ist aus einer Mischung von 50 1 bis 350 l Wasser, bevorzugt 80 1 bis 250 1, 110 bis 580 kg Zement, bevorzugt 180 bis 560 kg, 420 bis 1.100 1 gekörnten Styropor, bevorzugt 700 1 bis 800 1, ca. 0,9 bis 2,1 kg Fließmittel bevorzugt 1,5 kg, 60 l bis 210 l Schaummittel beziehungsweise Porenbildner, bevorzugt 100 l bis 150 l in Form von Schaum und 0,3 bis 1,0 kg Mikrofasern bevorzugt 0,5 bis 0,7 kg für 1,2 bis 2,0 m³ Beton. Die in der zuvor beschriebenen Ausführungsform erwähnten Vorteile und Einsatzgebiete treffen in gleicher Weise auf diese Weiterbildung zu.

Ein weiterer Aspekt des erfindungsgemäßen Leichtbetons ist dadurch angegeben, daß als Fließmittel ligninsulfosaure Salze und/oder Polymere der Mischung zugegeben werden. Dies sind Fließmittel, die den Bildungsprozeß des Leichtbetons und insbesondere die Bildung einer Zementsteinmatrix in der Mischung sehr positiv beeinflussen.

Eine vorteilhafte Weiterbildung des erfindungsgemäßen Leichtbetons zeichnet sich dadurch aus, daß Harzseife, Tenside, Proteine und/oder Sulfonate als Schaumbildner Bestandteil der Mischung sind. Speziell durch diese Schaummittel wird ebenfalls erreicht, daß die bei dem Stand der Technik bisher durch den Zusatz von Sand, Dolomit, Kalkpulver oder anderer mineralischer Zusatzstoffe verhinderte Porenbildung während der Mischungs-, Abbinde- und Erhärtungsprozesse nunmehr nicht mehr erfolgen kann und die Schaumbildner sehr effektiv wirken können. Damit wird jetzt erreicht, daß zum einen die bereits beschriebene richtige Bewehrungsfunktion der Fasern in der Zementsteinmatrix als Mikrobewehrung im Material entsteht. Damit läuft ein gewünschter Prozeß im Mikro- beziehungsweise Makrobereich ab, der nicht durch den Zusammenfall beziehungsweise Zerfall der Strukturen gekennzeichnet ist. Damit wird positiv beeinflußt, daß es nicht zu den bisher als nicht beherrschbaren aus dem Stand der Technik bekannten Abbindeschwinden beziehungsweise zur Rißneigung kommt. Ein weiterer Aspekt ist der, daß die Mischgeschwindigkeit relativ gering gehalten wird. Es werden also normallaufende Mischer bei der Herstellung der Mischung des Leichtbetonmörtels verwendet. Im Gegensatz dazu war es im Stand der Technik bisher bekannt, schnelllaufende Mischer zu verwenden, um besonders gute Fließeigenschaften und eine gute Sichtoberfläche zu erhalten. Die Erfindung weist nach, daß gerade durch die schnelllaufenden Mischer die Betonmatrix zerstört wird, so daß es nicht zu den gewünschten, porenbildenden Eigenschaften und insbesondere zur Zerstörung der Betonmatrix kommt, wodurch keine ausreichenden Festigkeiten erreicht werden können.

Eine vorteilhafte Weiterbildung der Erfindung sieht vor, daß der beziehungsweise die Schaumbildner und/oder der beziehungsweise die Porenbildner der Mischung in aufgeschäumter und/oder aufgeschlagener Form zugegeben werden. Auch diese Maßnahme führt zu einer sehr guten Mikrostruktur des Leichtbetons und beeinflußt den Aufbau einer günstigen Betonmatrix. Der Schaumbildner beziehungsweise Porenbildner wird beispielsweise in einem Vorschäumer aufgeschlagen und in geschäumter Form zugegeben. Dies kann beispielsweise durch Einspritzen erfolgen, dies kann allerdings auch durch ein Unterrühren beziehungsweise ein sogenanntes Unterheben des Schaums in die Mischung realisiert werden. Damit wird überraschenderweise erzielt, daß die Porenbildner, entgegen ihrer bekannten Wirkung, nunmehr den Aufbau einer sehr günstigen Betonmatrix positiv beeinflussen.

Erfindungsgemäß wurde auch gefunden, daß es von Vorteil ist, wenn das expandierte Styropor eine Körnung zwischen 0,5 bis 7,0 mm, bevorzugt 1,0 bis 5,0 mm aufweist. Durch diese Körnung wird eine sehr gute Mikrostruktur des Leichtbetons zusätzlich positiv beeinflußt.

Eine Weiterbildung des Leichtbetons zeichnet sich dadurch aus, daß Zement mit einer kurzen Abbindezeit und/oder einer sehr hohen Anfangsfestigkeit, bevorzugt einer gegenüber normalem Portlandzement höheren Anfangsfestigkeit, Bestandteil der Mischung ist. Im Gegensatz zu dem beim Stand der Technik sehr häufig eingesetzten Portlandsementtypen wie beispielsweise einem CEM II/32,5 wird gemäß dieser vorteilhaften Weiterbildung der Erfindung ein Zementtyp verwendet, der wesentlich kürzere Bindezeit und die höhere Anfangsfestigkeit gegenüber diesen Portlandzementen besitzt. Erfindungsgemäß wird dazu ein frühhochfester Zement, beispielsweise CEM I/42,5R oder höher eingesetzt. Durch den Einsatz eines derartigen Zementtyps wird ebenfalls eine Schonung der sehr wichtigen Porenbildung erreicht. Für die Erfindung gilt, je kürzer die Mischungszeit und je schneller die Erreichung einer bestimmten Anfangsfestigkeit ist, umso besser ist es für den Erhalt der Poren sowie der Mikrostruktur.

Es hat sich auch als Vorteil erwiesen, wenn als Fasern Polypropylen (PP)-Fasern und/oder Polyamid (PA)-Faser und/oder Polyäthylen-(PE)-fasern oder dergleichen und/oder alkaliresistene Glasfasern mit einer Faserlänge von 2,0 bis 30,0 mm, bevorzugt 3,0 bis 5,0 mm der Mischung zugegeben werden. Durch die dem Material während der Mischung zugefügten Fasern können diese nun zwischen den gebildeten und bestehenden Poren wie eine Mikrobewehrung wirken. Damit wird eine ausreichende Stabilität und Standfestigkeit erreicht. Dies führt letztlich dazu, daß ein derartiger Leichtbeton auch für tragende Wandkonstruktionen oder als Füllkörper für Decken beispielsweise Verwendung finden können.

Entsprechend einer vorteilhaften Weiterbildung der Erfindung ist es vorgesehen, einen frühhochfesten Zement, vorzugsweise CEM I. /42,5R und höher als Bestandteil der Mischung zu verwenden. Ein derartiger hochfester Zement führt zu den bereits zuvor beschriebenen Vorteilen.

Die Mikrofasern besitzen erfindungsgemäß eine derartige Elastizität beziehungsweise Dehnfähigkeit, daß sie das Quell- und/oder Schwindverhalten des Leichtbetons zu kompensieren vermögen. Dabei ist es entsprechend einer bevorzugten Variante der Erfindung vorgesehen, daß die Dehnfähigkeit der Mikrofasern mindestens 4 Promill aufweist. Damit besitzt die Mikrofaser in etwa das gleiche Dehnungsverhalten wie das Material, der Styroporbeton.

Erfindungsgemäß ist auch gefunden worden, daß es von Vorteil ist, wenn als Mikrofasern alkaliresistente beziehungsweise nicht verrottbare Naturfasern, beispielsweise Jute-, Bambus- oder Kokosfasern verwendet werden. Selbstverständlich ist es nach der Erfindung auch möglich, Stahlfasern als Mikrofasern einzusetzen.

Entsprechend einer vorteilhaften Weiterbildung der Erfindung ist vorgesehen, daß dem Leichtbeton Recycling-Styropor zugemischt wird. Hierdurch wird der Einsatz von Recycling-Material ebenfalls ermöglicht, was zu einer Reduzierung der Herstellungskosten für den erfindungsgemäßen Leichtbeton führt und was weiterhin dem Umweltschutz dient, da dadurch anstehende Recycling-Abfälle einer positiven Verwertung zugeführt werden können.

Die Aufgabe der Erfindung wird gelöst durch ein Verfahren zur Herstellung von Leichtbeton mit einer Trockenrohdichte von 200 bis 600 kg/m³ gemäß Anspruch 1, insbesondere nach einem oder mehreren der vorher beschriebenen Leichtbetone. Dieses erfindungsgemäße Verfahren zeichnet sich dadurch aus, daß der Mischung
1. Wasser,
2. Zement,
3. Fließmittel,
4. Mikrofasern und
5. Schaummittel beziehungsweise Porenbildner
   exakt in der vorstehenden Reihenfolge zugegeben werden.

Die Einhaltung der Reihenfolge der einzelnen Verfahrensschritte führt zu einer besonders positiven Eigenschaft des später erhaltenen Leichtbetons. Es ist selbstverständlich auch denkbar, daß die Reihenfolge nicht exakt in der vorgegebenen Reihenfolge vorgenommen wird und trotzdem ein Leichtbeton mit ähnlichen Eigenschaften erhalten wird. Erfindungsgemäß werden die Verfahrensschritte eingehalten, weil dadurch die Eigenschaften des späteren Leichtbetons, wie bereits beschrieben, sehr positiv beeinflußt werden. Es wird dadurch erreicht, daß sowohl eine gewünschte Porenanzahl und Porengröße, vorzugsweise von bis zu 5 mm Durchmesser, und die entsprechende Mikrobewehrung durch dieses Verfahren erhalten wird.

Die Aufgabe der Erfindung wird auch gelöst durch ein Verfahren zur Herstellung von Leichtbeton mit einer Trockenrohdichte von 200 bis 600 kg/m³ gemäß Anspruch 3, welches sich dadurch auszeichnet, daß der Mischung
1. Wasser,
2. Zement,
3. Styropor,
4. Fließmittel und
5. Mikrofasern und
6. Schaummittel beziehungsweise Porenbildner
in der vorstehenden Reihenfolge zugegeben werden. Dieses Verfahren unterscheidet sich von dem zuvor beschriebenen Verfahren insbesondere dadurch, daß die Mischung ebenfalls Styropor enthält, was zu einer bereits beschriebenen, weiteren Reduzierung der Trockenrohdichte des späteren Leichtbetons führt. Ansonsten gelten die zu dem vorstehenden Verfahren bereits ausgeführten, positiven Eigenschaften uneingeschränkt.

Die Verfahren wie zuvor beschrieben zeichnen sich entsprechend einer vorteilhaften Weiterbildung der Erfindung dadurch aus, daß das Schaummittel beziehungsweise die Porenbildner in geschäumter Form durch Undermischen zugegeben werden. Dies erfolgt beispielsweise dadurch, daß das Schaummittel beziehungsweise die Porenbildner in einem Vorschäumer aufgeschlagen beziehungsweise vorgeschäumt werden und dann in bereits geschäumter Form der Mischung zugegeben werden. Ähnlich wie das bei der Herstellung von Kuchenteig mit Eischaum realisiert wird, ist der Schaum dann der Mischung zuzugeben. Diese Verfahrensweise funktioniert selbstverständlich nur dann, wenn entsprechend langsam beziehungsweise normallaufende Mischer zur Realisierung des erfindungsgemäßen Verfahrens verwendet werden. Von Vorteil ist es selbstverständlich, wenn eine Steuerung den gesamten Mischprozeß insgesamt überwacht und so gewährleistet, daß zum einen die Abfolge der Zugabe der jeweiligen Komponenten eingehalten wird und zum anderen die Mischgeschwindigkeit und die jeweilige Zeitdauer des Mischens.

In das erfindungsgemäßen Verfahrens wird Schaummittel beziehungsweise Porenbildner in einer Zeiteinheit von 20 bis 70 Sekunden vor dem Mischungsende der Mischung zugegeben. Vorzugsweise ist es vorgesehen, daß Schaummittel beziehungsweise Porenbildner dazu in die Mischung eingespritzt wird.

Es ist in einer Variante der Erfindung auch möglich, daß die Mikrofasern gemeinsam gleichzeitig mit dem Schaummittel beziehungsweise Porenbildnern der Mischung, wie vorbeschrieben, zugegeben werden oder Schaummittel bzw. Porenbildner kurz vor den Mikrofasern zugesetzt werden. Das Vermischen erfolgt dann gleichzeitig für beide Stoffe.

Eine Weiterbildung der Erfindung zeichnet sich dadurch aus, daß ein Transportleichtbetonmörtel durch Mischen von Wasser, Mikrofasern, Zement, Styropor und Fließmittel zunächst in einem Fahrmischer hergestellt wird, wobei diese zum Einbauort bei ständigem Mischen transportiert wird und dieser Mischung der Schaum- beziehungsweise Porenbildner erst kurz vor dem Einfüllen vor Ort, vorzugsweise 20 bis 70 Sek. vor dem Mischungsende zugegeben wird. Dadurch kann man den so beschriebenen, erfindungsgemäßen Leichtbeton auch in bekannter Weise an dem Einbauort in entsprechende Schalungsformen geben oder in bestimmte Zwischenräume füllen, so daß auch dieses ansich bekannte Verfahren des Transportbetons für den erfindungsgemäßen Leichtbeton anwendbar ist. Selbstverständlich läßt sich dieses Verfahren auch auf einen Transportleichtbeton anwenden, der kein Styropor als Bestandteil, ansonsten aber die Bestandteile Zement, Wasser, Fließmittel, Schaum- beziehungsweise Porenbildner und Mikrofasern enthält.

Die Erfindung zeichnet sich dadurch aus, daß die Drehzahl des Mischers für den Mischvorgang langsam, maximal 30 U/Min. eingestellt wird. Gerade das langsame Mischen in Verbindung mit der kurzen Mischdauer führt zu dem gewünschten Ergebnis. Vorzugsweise wird diese Drehzahl, wie bereits erwähnt, von einer Steuerung eingestellt und gesteuert und so gewährleistet, daß durch höhere Drehzahlen die Betonmatrix und der Aufbau der Kristallstruktur nicht zerstört wird. Im Gegensatz zu dem aus dem Stand der Technik bekannten Herstellungsverfahren von Leichtbeton, werden entsprechend einer vorteilhaften Weiterbildung des erfindungsgemäßen Verfahrens die Zuschläge volumenmäßig dosiert. Dadurch ist es möglich, das Porenvolumen zu erhalten und damit die Betonrohdichte genau festzulegen und einen Leichtbeton mit geschlossenzelliger Struktur herzustellen. Materialeigenschaften können durch die Wahl der Betonrohdichte den jeweiligen Anforderung, wie bereits erwähnt, angepaßt werden. Dabei ist es vor allem möglich, den erfindungsgemäßen Leichtbeton im unteren Rohdichtebereich ≤ 600 kg/m³ einzusetzen. Die Verbindung zwischen Dämmstoff und Beton ermöglicht eine bestmögliche Kombination von Tragverhalten, Schalldämmung, Wärmedämmung und Brandschutz.

Entsprechend einer vorteilhaften Weiterbildung der Erfindung ist es weiterhin vorgesehen, daß ein Zwangsmischer verwendet wird und daß eine Steuerung die Mischungszeit und das Mischungsverhältnis entsprechend vorgebbarer Dosierungen konstant hält. Hierbei wird beispielsweise die Mischzeit und das Mischungsverhältnis über eine sogenannte SPS-Steuerung konstant gehalten und dosiert. Ein Zwangsmischer ist dabei beispielsweise auf 3 Waagezellen so platziert, daß das Gewicht des Mischgutes nach einem vorher festgelegten Programm (Mischungsverhältnis je nach gewünschter Rohdichte) genau dosiert und dann in den Zwangsmischer gelangt. Dabei ist es selbstverständlich möglich, entsprechend der jeweils gewünschten Rohdichte des Leichtbetons der Steuerung die entsprechenden Mischungsparameter vorzugeben. Diese sind dann während des gesamten Mischvorganges konstant gehalten.

Ein weiterer Aspekt des erfindungsgemäßen Verfahrens ist dadurch angegeben, daß der fertig gemischte Leichtbetonmörtel in Formen gegegeben und gerüttelt wird. Nach Erreichen der Mindeststandfestigkeit wird das Material den Formen entnommen. Es ist dabei eine maximale Rütteldauer von vorzugsweise bis zu 15 Sekunden vorgesehen. Das Erreichen der Mindeststandfestigkeit zeigt an, daß der Leichtbeton den Formen entnommen werden kann, ohne dadurch die genaue plan- und winkelgerechte Herstellung der entsprechenden Fertigteile bzw. Bauelemente negativ zu beeinflussen. Diese Mindeststandfestigkeit wird je nach Mischungsverhältnis auch unterschiedlich sein, so daß dazu entsprechend den vorhandenen Erfahrungswerten bzw. entsprechend den dazu vornehmbaren Berechnungen verfahren werden kann.

Die bisher beschriebenen Verfahren nach der Erfindung betreffen eine sogenannte diskontinuierliche Fertigung von Bauelementen. Dabei wird jeweils ein bestimmtes Volumen des Leichtbetonmörtels angesetzt, nach dem Mischen in die Formen gegeben, kurz gerüttelt, abgezogen und nach dem Aushärten ausgeschalt. Entsprechend einer vorteilhaften Weiterbildung der Erfindung ist es jedoch auch vorgesehen, eine kontinuierliche Fertigung von Bauelementen mittels des erfindungsgemäßen Leichtbetons zu ermöglichen. Dies geschieht erfindungsgemäß dadurch, daß für die Mischung ein Mischer in Art einer Mörtelpumpe verwendet wird, wobei das Schaummittel beziehungsweise der Porenbildner kurz vor der Austrittsöffnung der Mörtelpumpe erst zugegeben wird. Dies geschieht selbstverständlich in dem Zeitrahmen wie in den zuvor vorgestellten Verfahren beschrieben.

Der so gemischte Leichtbetonmörtel wird in eine sich kontinuierlich bewegende Endlosschalung gegeben und gegebenenfalls auch über eine Rüttelstrecke transportiert. An einem End- beziehungsweise Wendepunkt der Schalung wird der bereits eine eigene Standfestigkeit aufweisende Leichtbeton dann geschnitten und kann anschließend entnommen beziehungsweise mittels dafür üblicher Transportmittel abtransportiert werden. Dies können beispielsweise Förderbänder oder Rollenbänder sein. Die Endlosschalung kann beispielsweise in Form einer umlaufenden Schalung unterhalb der Einfüllebene zurücklaufen und am Anfang der Einfüllebene wieder nach oben geschwenkt werden, so daß immer eine entsprechende Schalung zur Verfügung steht. Beispielsweise kann es dazu vorgesehen sein, unterhalb der Einfüllebene auch entsprechende Reinigungseinrichtungen vorzusehen und nach der Reinigung dann gegebenenfalls ein entsprechendes Trennmittel auf die Schalungswände aufzubringen. Ein derartiges Verfahren eignet sich insbesondere zur Herstellung von Leichtbetonformsteinen, die auf diese Weise sehr effizient und kostengünstig herstellbar sind.

Erfindungsgemäß kann auch ein Leichtbetonfertigteil bzw. Bauelement, bestehend aus Leichtbeton hergestellt nach einem oder mehreren der zuvor beschriebenen Verfahren zur Verfügung gestellt werden. Ein derartiger Leichtbeton ist nunmehr ohne Einschränkungen als Außenwandelement (Vollelement/Außenwandstärke = 30 cm) mit einem hervorragendem K-Wert (Wärmedurchgangskoeffizient) von ca. 0,30 bis 0,40 (ohne Innen- und Außenputz, je nach Format) zur Verfügung gestellt. Damit werden alle Anforderungen nach der neuesten Wärmeschutzverodnung (EnEV) erfüllt. Die sehr guten Wärmedämmeigenschaften dieses Leichtbetons bewirken eine schnelle Erwärmung der Räume. Das Energieeinsparpotenzial des gedämmten Bauwerkes ist hoch und die Heizkosten entsprechend niedrig. Mit derartigen Leichtbetonfertigteilen kann schnell, exakt und ohne Mörtelfuge gebaut werden. Dabei entstehen saubere und korrekte Wandanschlüsse ohne Kältebrücken. Ein zusätzlicher Aufwand der Wärmedämmung des Bauwerkes ist nunmehr nicht erforderlich. Die Baustoffkennwerte derartiger Leichtbetonfertigteilelemente bzw. Bauelemente hinsichtlich Statik, Brandschutz, Schallschutz und Diffusion sind gut. Das Material besitzt weiterhin eine sehr gute Putzhaftung durch die porige Oberflächenstruktur und ist frostunempfindlich. Deshalb ist Bauen auch im Winter möglich.

Eine Weiterbildung des Leichtbetonfertigteils zeichnet sich dadurch aus, daß es in einer kontinuierlich durchgeführten Fertigung als Platte, Baustein, Dachelement oder dergleichen erhalten wurde.

Die Ausführungsbeispiele sind nicht erfindungsgemäß.

In einem ersten Ausführungsbeispiel ist es beispielsweise vorgesehen, daß die Mischung für einen Leichtbeton mit einer Trockenrohdichte von 200 kg/m³ aus 80 Liter Wasser, 180 kg Zement, 800 Liter Styropor in einer Körnung von 1 mm bis 5 mm, ligninsulfosauren Salz oder Polymeren als Fließmittel mit einer Menge von 1,5 kg, Schaummittel, beispielsweise Harzseife, Proteine, Tenside oder Sulfonate in einer Menge von 150 Litern in Form von Schaum und Fasern mit einer Menge von ca. 0,5 kg bis 0,7 kg und einer bevorzugten Faserlänge von 2 mm bis 5 mm, maximal bis zu 30 mm, gemischt werden. Die Mischzeit beträgt maximal 90 Sekunden. Während der Mischzeit werden 45 Sekunden lang die 150 Liter des Schaummittels zugesetzt. Derartig hergestellter Leichtbeton besitzt dann eine Trockenrohdichte nach dem Abbindeprozeß von ca. 200 kg/m³. Er besitzt die bereits beschriebenen vorteilhaften Eigenschaften und neigt nicht zur Rißbildung und zeigt keine Schwindungseffekte, wie dies bei den Leichtbetonen nach dem Stand der Technik der Fall ist.

Für einem Leichtbeton mit einer Trockenrohdichte von ca. 600 kg/m³ mischt man erfindungsgemäß 250 Liter Wasser, 560 kg Zement, 700 Liter Styropor in einer Körnung von 1 mm bis 5 mm, 1,5 kg Fließmittel wie zuvor beschrieben und 100 Liter Schaummittel, beispielsweise Harzseife, Proteine, Tenside oder Sulfonate als Schaum mit Fasern in einer Menge von 0,5 kg bis 0,7 kg. Die Mischzeit beträgt dabei wieder maximal 90 Sekunden. Für die erfindungsgemäße Lösung gilt dabei, daß beim Herstellungsverfahren die Zuschläge nicht gewichtsmäßig sondern volumenmäßig dosiert werden. Ein weiterer Vorteil dieser erfindungsgemäßen Leichtbetone ist dadurch angegeben, daß sie keine mineralischen Zuschläge enthalten. Durch das Einfüllen in entsprechende Formen können die Betonfertigteile aus den Leichtbeton in einer Rüttelzeit von 15 Sekunden beispielsweise erhalten werden. Nach Erreichen der Mindeststandfestigkeit der Betonelemente, die entsprechend des eingesetzten Zementanteiles unterschiedlich ausfällt, wird ausgeschalt und es entstehen Leichtbetonelemente bzw. Fertigteile mit hervorragenden Eigenschaften, wie sie bisher bei Leichtbetonen, insbesondere ohne Stahlbewehrung, noch nicht erreicht wurden. Die negativen Schwindungsprozesse werden durch die zuvor beschriebenen Beispiele drastisch reduziert.

Mit dem Leichtbeton kann, wie bereits erwähnt, sehr schnell und exakt ohne Mörtelfuge jetzt gebaut werden. Zusätzliche Aufwendungen bezüglich der Wärmedämmung sind nun nicht mehr notwendig. Der Leichtbeton wird dabei am Bau trocken, das heißt ohne Mörtelband, versetzt. Durch die vielseitige Verwendbarkeit eignet sich der Leichtbeton für jeden Bauzweck, angefangen vom Einfamilienhaus bis zum Hochhaus sowie für Bauten der Industrie, des Gewerbes und der Landwirtschaft. Die Leichtbetonbauweise kann auch als komplettes Wandsystem hergestellt werden. Dadurch werden Arbeitskräfte eingespart. Es ist beispielsweise möglich, daß Arbeitskräfte oder Heimwerker sich sehr schnell mit dieser Bauweise vertraut machen. Die Wandelemente sind dabei leicht, was verminderte Transportkosten beispielsweise zur Folge hat. Auch können Hebezeuge eingesetzt werden, die nicht wie im Stahlbetonbau sehr häufig erforderlich, eine hohe Tragfähigkeit erfordern. Es sind beispielsweise kleinere und damit kostengünstigere Hebezeuge einsetzbar. Durch die Leichtbetonwandelemente wird ein sehr rascher Baufortschritt durch die Montage dieser Elemente erreicht. Die Gebäude sind sehr schnell trocken und damit schneller bezugsfertig.

Der Leichtbeton kann aufgrund seines geringen Gewichtes auch in erdbebengefährdeten Gebieten Verwendung finden. Hierzu ist es lediglich erforderlich, eine zusätzliche Rundumbewehrung vorzusehen, die dann zu einer hohen Stabilität und Flexibilität gegen Erschütterungen führt.

Bei der Verarbeitung am Bau, je nach gewähltem Format, werden die Hohlräume mit vor Ort gemischtem Leichtbeton aufgefüllt. Es ist allerdings auch möglich, bestimmte statische notwendige Bauwerksteile mit normalem Beton bzw. Stahlbeton aufzufüllen bzw. auszusteifen bzw. mit Stahlbetonelementen oder Ziegelwänden zu kombinieren.

Wie bereits erwähnt besitzt der Leichtbeton sehr gute Wärmedämmeigenschaften. Damit sind für den Wärmehaushalt von Wohnhäusern beispielsweise nahezu optimale Voraussetzungen geschaffen. Die Leichtbetonelemente lassen sich auch in Produktionsanlagen unter bestimmten Bedingungen einer Großproduktion von Wandelementen produzieren. Hierzu ist es lediglich erforderlich, entsprechende Fertigungsanlagen zu konzipieren und so herzustellen, daß die gleichbleibend hohe Qualität unter den Bedingungen einer Großproduktion von Wandelementen gewährleistet ist.

Der Leichtbeton läßt sich demnach an Einfamilienhäusern, Doppelhäusern, Reihenhäusern sowie Villen, Mehrfamilienhäusern bis zwei Stockwerken ohne Bewehrungsmaterial, bei mehrgeschossigen Bauewerken, als Ausfach- oder Konstruktionselement beispielsweise einsetzen. Leichtbetonelemente lassen sich zur Komplettierung von Krankenhäusern, Schulen, Kindergärten, Kaufmärkten, Industriegebäuden, Produktionshallen, Bauhöfen, sogenannten schwimmenden Häusern, Aufstockung von Gebäuden sowie bei Sanierungsmaßnahmen entweder als Einzelelemente oder in Kombination mit statisch tragenden anderen Bauelementen einsetzen.

Der Leichtbeton gehört zur Gruppe der sehr leichten Leichtbetone. Maßgebend für die Festigkeitseigenschaften ist das Zementsteingerüst, das die Schaumstoffzuschläge umgibt und die Betonrohdichte beeinflußt. Ebenfalls von Bedeutung sind die Kornform und die Korngröße sowie die Oberflächenbeschaffenheit der verwendeten Zuschläge. Im Gegensatz zu mineralischen Zuschlägen werden die erfindungsgemäßen Zuschläge nicht gewichtsmäßig, sondern volumenmäßig dosiert. Dadurch ist es möglich, das Porenvolumen und damit die Betonrohdichte genau festzulegen und einen Leichtbeton mit geschlossen zelliger Struktur herzustellen. Dabei ist es weiterhin möglich, Materialeigenschaften durch die Wahl der Betonrohdichte den jeweiligen Anforderungen anzupassen.

## Patentansprüche

1. Verfahren zur Herstellung von Leichtbeton mit einer Trokkenrohdichte von 200 bis 600 kg/m³ aus einer Mischung von Wasser, Zement, Fließmittel, Schaummittel bzw. Porenbildner und Mikrofasern **dadurch gekennzeichnet, dass** der Mischung
- erstens Wasser,
- zweitens Zement,
- drittens Fließmittel,
- viertens Mikrofasern und
- fünftens Schaummittel bzw. Porenbildner
in der vorstehenden Reihenfolge zugegeben wird und dass das Schaummittel beziehungsweise der Porenbildner in geschäumter Form durch Untermischen zugegeben werden, wobei der Schaum- beziehungsweise Porenbildner in geschäumter Form in 20 bis 70 Sekunden vor Mischungsende zugegeben wird und die Drehzahl des Mischers für den Mischvorgang langsam, maximal 30 U/Min., eingestellt wird.

2. Verfahren zur Herstellung von Leichtbeton mit einer Trokkenrohdichte von 200 bis 600 kg/m³ aus einer Mischung von Wasser, Zement, Fließmittel, Schaummittel bzw. Porenbildner und Mikrofasern hergestellt wird, **dadurch gekennzeichnet, dass** der Mischung
- erstens wasser,
- zweitens Zement,
- drittens Fließmittel,
- viertens Mikrofasern und Schaummittel bzw. Porenbildner gleichzeitig oder zuerst das Schaummittel bzw. der Porenbildner und hernach die Mikrofasern
zugegeben werden und dass das Schaummittel beziehungsweise der Porenbildner in geschäumter Form durch Untermischen zugegeben werden, wobei der Schaum- beziehungsweise Porenbildner in geschäumter Form in 20 bis 70 Sekunden vor Mischungsende zugegeben wird und die Drehzahl des Mischers für den Mischvorgang langsam, maximal 30 U/Min., eingestellt wird.

3. Verfahren zur Herstellung von Leichtbeton mit einer Trokkenrohdichte von 200 bis 600 kg/m³ aus einer Mischung von Wasser, Zement, Styropor, Fließmittel, Schaummittel bzw. Porenbildner und Mikrofasern, **dadurch gekennzeichnet, dass** der Mischung
- erstens Wasser,
- zweitens Zement,
- drittens Styropor,
- viertens Fließmittel
- fünftens Mikrofasern und
- sechstens Schaummittel bzw. Porenbildner
in der vorstehenden Reihenfolge zugegeben werden und dass das Schaummittel beziehungsweise der Porenbildner in geschäumter Form durch Untermischen
zugegeben werden, wobei der Schaum- beziehungsweise Porenbildner in geschäumter Form in 20 bis 70 Sekunden vor Mischungsende zugegeben wird und die Drehzahl des Mischers für den Mischvorgang langsam, maximal 30 U/Min., eingestellt wird.

4. Verfahren zur Herstellung von Leichtbeton mit einer Trokkenrohdichte von 200 bis 600 kg/m³ aus einer Mischung von Wasser, Zement, Styropor, Fließmittel, Schaummittel bzw. Porenbildner und Mikrofasern, **dadurch gekennzeichnet, dass** der Mischung
- erstens Wasser,
- zweitens Zement,
- drittens Styropor,
- viertens Fließmittel
- fünftens Mikrofasern und Schaummittel bzw. Porenbildner gleichzeitig oder zuerst das Schaummittel bzw. der Porenbildner und hernach die Mikrofasern
zugegeben werden und dass das Schaummittel beziehungsweise der Porenbildner in geschäumter Form durch Untermischen zugegeben werden, wobei der Schaum- beziehungsweise Porenbildner in geschäumter Form in 20 bis 70 Sekunden vor Mischungsende zugegeben wird und die Drehzahl des Mischers für den Mischvorgang langsam, maximal 30 U/Min., eingestellt wird.

5. Verfahren nach einem der vorhergehenden Ansprüche 1 bis 4, **dadurch gekennzeichnet, dass** die Mischung des Leichtbetonmörtels diskontinuierlich, zum Beispiel chargenweise erfolgt.

6. Verfahren nach einem der vorhergehenden Ansprüche 1 bis 5, **dadurch gekennzeichnet, dass** die Mischung des Leichtbetonmörtels kontinuierlich erfolgt.

7. Verfahren nach einem der vorhergehenden Ansprüche 1 bis 6, **dadurch gekennzeichnet, dass** eine Mischung für einen Transportleichtbeton als Mischung von Wasser, Zement, Styropor, Mikrofasern und Fliesmittel zunächst in einem Fahrmischer zum Einbauort transportiert wird und dieser Mischung der Schaum- bzw. Porenbilder in geschäumter Form erst kurz vor dem Einfüllen vor Ort zugegeben wird.

8. Verfahren nach einem der vorhergehenden Ansprüche 1 bis 8, **dadurch gekennzeichnet, dass** die Zuschläge volumenmäßig dosiert werden.

9. Verfahren nach einem der vorhergehenden Ansprüche 1 bis 8, **dadurch gekennzeichnet, dass** ein Zwangsmischer verwendet wird und eine Steuerung die Mischungszeit, die Drehgeschwindigkeit und das Mischungsverhältnis entsprechend vorgebbarer Dosierungen konstant hält.

10. Verfahren nach einem der vorhergehenden Ansprüche 1 bis 9, **dadurch gekennzeichnet, dass** der fertig gemischte Leichbetonmörtel in Formen gegeben und gerüttelt, vorzugsweise bis zu maximal 15 Sekunden und nach Erreichen der Mindeststandfestigkeit den Formen entnommen wird.

11. Verfahren nach einem der vorhergehenden Ansprüche 1 bis 10, **dadurch gekennzeichnet, dass** für die Mischung ein Mischer in Art einer Mörtelpumpe verwendet wird, wobei Schaummittel bzw. Porenbildner in geschäumter Form kurz vor der Austrittsöffnung der Mörtelpumpe zugegeben wird.

12. Verfahren nach einem der vorhergehenden Ansprüche 1 bis 11, **dadurch gekennzeichnet, dass** der fertig gemischte Leichtbetonmörtel in eine kontinuierlich sich bewegende Endlosschalung gegeben und vor einem End- bzw. Wendepunkt der Schalung dann geschnitten wird, wenn der Leichtbeton bereits eine eigene Mindeststandfestigkeit aufweist, und anschließend entnommen bzw. abtransportiert wird.

13. Verfahren nach einem der vorhergehenden Ansprüche 1 bis 12, **dadurch gekennzeichnet, dass** in der Mischung keine mineralischen Zuschlagstoffe wie Sand, Asche, Hochofenschlacke, Flugasche, Schaumglas, Blähglas, Blähschiefer, Blähton, Kalk, Hüttenbims, Naturbims oder dergleichen enthalten sind.

14. Verfahren nach einem der vorhergehenden Ansprüche 1 bis 13, wobei der Mischung
- 50 1 bis 350 1 Wasser, bevorzugt 80 bis 250 1,
- 110 bis 580 kg Zement, bevorzugt 180 bis 560 kg,
- ca. 0,9 bis 2,1 kg Fließmittel, bevorzugt 1,5 kg,
- 60 1 bis 210 1 Schaummittel bzw. Porenbildner, bevorzugt 100 1 bis 150 1 in Form von Schaum und
- 0,3 bis 1,0 kg Mikrofasern, bevorzugt 0,5 bis 0,7 kg, für 1,2 bis 2,0 m³ Leichtbeton zugegeben werden.

15. Verfahren nach einem der vorhergenden Ansprüche 1 bis 14, wobei der Mischung
- 50 1 bis 350 1 Wasser, bevorzugt 80 bis 250 1,
- 110 bis 580 kg Zement, bevorzugt 180 bis 560 kg,
- 420 bis 1.100 1 gekörntem Styropor, bevorzugt 700 bis 800 1,
- ca. 0,9 bis 2,1 kg Fließmittel, bevorzugt 1,5 kg,
- 60 1 bis 210 1 Schaummittel bzw. Porenbildner, bevorzugt 100 1 bis 150 1 in Form von Schaum und
- 0,3 bis 1,0 kg Mikrofasern, bevorzugt 0,5 bis 0,7 kg, für 1,2 - 2,0 m³ Leichtbeton zugegeben werden.

16. Verfahren nach einem der vorhergehenden Ansprüche 1 bis 15, **dadurch gekennzeichnet, dass** als Fließmittel ligninsulfosaure Salze und/oder Polymere der Mischung zugegeben werden.

17. Verfahren nach einem der vorhergehenden Ansprüche 1 bis 16, **dadurch gekennzeichnet, dass** Tenside und/oder Harzseife und/oder Sulfonate und/oder Proteine als Schaumbildner Bestandteil der Mischung sind.

18. Verfahren nach einem der vorhergehenden Ansprüche 1 bis 17, **dadurch gekennzeichnet, dass** das expandierte Styropor eine Körnung zwischen 0,5 bis 7 mm, bevorzugt 1 bis 5 mm, aufweist.

19. Verfahren nach einem der vorhergehenden Ansprüche 1 bis 19, **dadurch gekennzeichnet, dass** Zement mit einer hohen Anfangsfestigkeit, bevorzugt einer gegenüber normalem Portlandzement erhöhten Anfangsfestigkeit verwendet wird.

20. Verfahren nach einem der vorhergehenden Ansprüche 1 bis 19, **dadurch gekennzeichnet, dass** ein früh hochfester Zement verwendet wird.

21. Verfahren nach einem der vorhergehenden Ansprüche 1 bis 20, **dadurch gekennzeichnet, dass** als Microfasern Polypropylen (PP)-Fasern, Polyamid (PA)-Fasern, Polypropylen (PP)-Fasern, Polyäthylen (PE)-Fasern und/oder alkaliresistente Glasfasern mit einer Faserlänge von 2 bis 30 mm, bevorzugt 3 bis 5 mm, der Mischung zugegeben werden.

22. Verfahren nach einem der vorhergehenden Ansprüche 1 bis 21, **dadurch gekennzeichnet, dass** die Mikrofasern eine derartige Elastizität bzw. Dehnfähigkeit aufweisen, daß sie das Quell- und/oder Schwindverhalten des Leichtbetons zu kompensieren vermögen.

23. Verfahren nach einem der vorhergehenden Ansprüche 1 bis 22, **dadurch gekennzeichnet, dass** alkaliresistente und/oder nicht verrottbare Naturfasern, beispielsweise Jute-, Bambus-, Kokosfasern und/oder Stahlfasern Bestandteil der Mischung sind.

24. Verfahren nach einem der vorhergehenden Ansprüche 1 bis 23, **dadurch gekennzeichnet, dass** dem Leichtbeton Recycling-Styropor zugemischt wird.

## Claims

1. Method for producing lightweight concrete with a dry density of 200 to 600 kg/m3 from a mixture of water, cement, plasticizer, foaming agent, or pore former and micro fibers, **characterized in that**
- first water,
- second cement,
- third plasticizer,
- fourth micro fibers, and
- fifth foaming agent or pore former
are added to the mixture in the before described order,
and that the foaming agent or the pore former are added in foamed condition by mixing in, wherein the foam or pore former in foamed form is added in 20 to 70 seconds before the end of the mixing, and the rotational speed of the blender is set slow for the blending procedure, maximum 30 revolutions/minute.

2. Method for producing lightweight concrete with a dry density of 200 to 600 kg/m3 from a mixture of water, cement, plasticizer, foaming agent, or pore former and micro fibers, **characterized in that**
- first water,
- second cement,
- third plasticizer,
- fourth micro fibers and foaming agent or pore former at the same time, or, first of all, the foaming agent or the pore former, and, after that, the micro fibers
are added to the mixture, and that the foaming agent or the pore former are added in foamed form by mixing in, wherein the foam or pore former are added in foamed form in 20 to 70 seconds before the end of mixing, and the rotational speed of the blender for the mixing procedure is set slow, maximum 30 revolutions/minute.

3. Method for producing lightweight concrete with a dry density of 200 to 600 kg/m3 from a mixture of water, cement, Styrofoam, plasticizer, foaming agent, or pore former and micro fibers, **characterized in that**
- first water,
- second cement,
- third Styrofoam,
- fourth plasticizer,
- fifth micro fibers, and
- sixth foaming agent or pore former
are added to the mixture in the before described order, and that the foaming agent or the pore former are added in foamed form by mixing in, wherein the foam or pore former in foamed form are added in 20 to 70 seconds before the end of mixing, and the rotational speed of the blender is set slow for the mixing procedure, maximum 30 revolutions/minute.

4. Method for producing lightweight concrete with a dry density of 200 to 600 kg/m3 from a mixture of water, cement, Styrofoam, plasticizer, foaming agent or pore former and micro fibers, **characterized in that**
- first water,
- second cement,
- third Styrofoam,
- fourth plasticizer,
- fifth micro fibers and foaming agent or pore former at the same time, or, first of all, the foaming agent or the pore former, and, after that, the micro fibers
are added to the mixture, and that the foaming agent or the pore former are added in foamed form by mixing in, wherein the foam or pore former is added in foamed form in 20 to 70 seconds before the end of mixing, and the rotational speed of the blender is set slow for the mixing procedure, maximum 30 revolutions/minute.

5. Method according to one of the preceding claims 1 to 4, **characterized in that** blending of the lightweight concrete mortar is carried out discontinuously, for example in batches.

6. Method according to one of the preceding claims 1 to 5, **characterized in that** blending of the lightweight concrete mortar is carried out continuously.

7. Method according to one of the preceding claims 1 to 6, **characterized in that** a mixture for a transport lightweight concrete as mixture of water, cement, Styrofoam, micro fibers and plasticizer is transported, first of all, in a mixer truck to the mounting location, and the foam or pore former in foamed form is added only shortly before filling in on site to the mixture.

8. Method according to one of the preceding claims 1 to 7, **characterized in that** the additions are measured out with regard to their volume.

9. Method according to one of the preceding claims 1 to 8, **characterized in that** a compulsory mixer is used, and a control keeps the mixing time, the rotational speed and the mixture ratio constant according to pre-determined dosages.

10. Method according to one of the preceding claims 1 to 9, **characterized in that** the ready mixed lightweight concrete mortar is put in moulds and is jarred, preferably up to maximal 15 seconds, and, after the minimum stability has been reached, is removed from the mould.

11. Method according to one of the preceding claims 1 to 10, **characterized in that** for mixing a blender in the way of a mortar pump is used, wherein the foaming agent or pore former is added in foamed form shortly before the exit opening of the mortar pump.

12. Method according to one of the preceding claims 1 to 11, **characterized in that** the ready mixed lightweight concrete mortar is put in a continuously moving endless formwork, and is cut then before an end or turning point of the formwork, when the lightweight concrete has already its own minimum stability, and, after that, is removed or transported away.

13. Method according to one of the preceding claims 1 to 12, **characterized in that** the mixture does not contain any mineral aggregates such as sand, ash, blast furnace slag, fly ash, foam glass, expanded glass, expanded slate, expanded clay, lime, pumice slag, natural pumice or the like.

14. Method according to one of the preceding claims 1 to 13, wherein
- 50 1 to 350 1 of water, preferably 80 to 250 1,
- 110 to 580 kg cement, preferably 180 to 560 kg,
- about 0.9 to 2.1 kg plasticizer, preferably 1.5 kg,
- 60 1 to 210 1 foaming agent or pore former, preferably 100 1 to 150 1 in the form of foam, and
- 0.3 to 1.0 kg micro fibers, preferably 0.5 to 0.7 kg are added to the mixture for 1.2 to 2.0 m3 lightweight concrete.

15. Method according to one of the preceding claims 1 to 14, wherein
- 50 1 to 350 1 water, preferably 80 to 250 1,
- 110 to 580 kg cement, preferably 180 to 560 kg,
- 420 to 1,100 1 grained Styrofoam, preferably 700 to 800 1,
- about 0.9 to 2.1 kg plasticizer, preferably 1.5 kg,
- 60 1 to 210 1 foaming agent or pore former, preferably 100 1 to 150 1 in the form of foam, and
- 0.3 to 1.0 kg micro fibers, preferably 0.5 to 0.7 kg
are added to the mixture for 1.2 to 2.0 m3 lightweight concrete.

16. Method according to one of the preceding claims 1 to 15, **characterized in that** as plasticizer ligninsulfonic acid salts and/or polymers are added to the mixture.

17. Method according to one of the preceding claims 1 to 16, **characterized in that** tensides and/or resin soap and/or sulfonates and/or proteins as foam former are part of the mixture.

18. Method according to one of the preceding claims 1 to 17, **characterized in that** the expanded Styrofoam has a graining between 0.5 to 7 mm, preferably 1 to 5 mm.

19. Method according to one of the preceding claims 1 to 18, **characterized in that** cement with a high initial stability, preferably a higher initial stability compared with usual Portland cement, is used.

20. Method according to one of the preceding claims 1 to 19, **characterized in that** a soon high-strength cement is used.

21. Method according to one of the preceding claims 1 to 20, **characterized in that** as micro fibers polypropylene (PP) fibers, polyamide (PA) fibers, polypropylene (PP) fibers, polyethylene (PE) fibers, and/or alkali resistant glass fibers with a fiber length of 2 to 30 mm, preferably 3 to 5 mm, are added to the mixture.

22. Method according to one of the preceding claims 1 to 21, **characterized in that** the elasticity or flexibility of the micro fibers is such that they are able to compensate the swelling and/or shrinking behaviour of the lightweight concrete.

23. Method according to one of the preceding claims 1 to 22, **characterized in that** alkali resistant and/or non-rotting natural fibers, such as, for example, jute, bamboo, coconut and/or steel fibers are part of the mixture.

24. Method according to one of the preceding claims 1 to 23, **characterized in that** recycled Styrofoam is added to the lightweight concrete.

## Revendications

1. Procédé de fabrication de béton léger ayant une masse volumique sèche comprise entre 200 et 600 kg/m3 à partir d'un mélange d'eau, de ciment, de fluidifiant, d'adjuvant entraineur d'air ou d'agent d'expansion et de microfibres, **caractérisé en ce que** les substances suivantes sont ajoutées au mélange dans l'ordre indiqué, à savoir
- premièrement l'eau,
- deuxièmement le ciment,
- troisièmement le fluidifiant,
- quatrièmement les microfibres et
- cinquièmement l'adjuvant entraineur d'air ou l'agent d'expansion,
et **en ce que** l'adjuvant entraineur d'air ou l'agent d'expansion est ajouté sous forme expansée par incorporation approximativement 20 à 70 secondes avant la fin du malaxage en réduisant la vitesse de rotation du malaxeur en-dessous de 30 tr/min.

2. Procédé de fabrication de béton léger ayant une masse volumique sèche comprise entre 200 et 600 kg/m3 à partir d'un mélange d'eau, de ciment, de fluidifiant, d'adjuvant entraineur d'air ou d'agent d'expansion et de microfibres, **caractérisé en ce que** les substances suivantes sont ajoutées au mélange dans l'ordre indiqué, à savoir à
- premièrement l'eau,
- deuxièmement le ciment,
- troisièmement le fluidifiant,
- quatrièmement les microfibres et l'adjuvant entraineur d'air ou l'agent d'expansion soit simultanément soit d'abord l'adjuvant entraineur d'air ou l'agent d'expansion puis les microfibres,
et **en ce que** l'adjuvant entraineur d'air ou l'agent d'expansion est ajouté sous forme expansée par incorporation approximativement 20 à 70 secondes avant la fin du malaxage en réduisant la vitesse de rotation du malaxeur en-dessous de 30 tr/min.

3. Procédé de fabrication de béton léger ayant une masse volumique sèche comprise entre 200 et 600 kg/m3 à partir d'un mélange d'eau, de ciment, de polystyrène expansé, de fluidifiant, d'adjuvant entraineur d'air ou d'agent d'expansion et de microfibres, **caractérisé en ce que** les substances suivantes sont ajoutées au mélange dans l'ordre indiqué, à savoir á
- premièrement l'eau,
- deuxièmement le ciment,
- troisièmement le polystyrène expansé,
- quatrièmement le fluidifiant,
- cinquièmement les microfibres et
- sixièmement l'adjuvant entraineur d'air ou l'agent d'expansion,
et **en ce que** l'adjuvant entraineur d'air ou l'agent d'expansion est ajouté sous forme expansée par incorporation approximativement 20 à 70 secondes avant la fin du malaxage en réduisant la vitesse de rotation du malaxeur en-dessous de 30 tr/min.

4. Procédé de fabrication de béton léger ayant une masse volumique sèche comprise entre 200 et 600 kg/m3 à partir d'un mélange d'eau, de ciment, de polystyrène expansé, de fluidifiant, d'adjuvant entraineur d'air ou d'agent d'expansion et de microfibres, **caractérisé en ce que** les substances suivantes sont ajoutées au mélange dans l'ordre indiqué, à savoir
- premièrement l'eau,
- deuxièmement le ciment,
- troisièmement le polystyrène expansé,
- quatrièmement le fluidifiant,
- cinquièmement les microfibres et l'adjuvant entraineur d'air ou l'agent d'expansion soit simultanément soit d'abord l'adjuvant entraineur d'air ou l'agent d'expansion puis les microfibres,
et **en ce que** l'adjuvant entraineur d'air ou l'agent d'expansion est ajouté sous forme expansée par incorporation approximativement 20 à 70 secondes avant la fin du malaxage en réduisant la vitesse de rotation du malaxeur en-dessous de 30 tr/min.

5. Procédé selon une des revendications précédentes 1 à 4, **caractérisé en ce que** le procédé mélangeur du mortier du béton léger est effectué avec interruptions, par exemple par étapes.

6. Procédé selon une des revendications précédentes 1 à 5, **caractérisé en ce que** le procédé mélangeur du mortier du béton léger est effectué sans interruption.

7. Procédé selon une des revendications précédentes 1 à 6, **caractérisé en ce qu'**un mélange de béton léger de transport est d'abord fabriqué à partir d'un mélange d'eau, de ciment, de polystyrène expansé, de microfibres et de fluidifiant puis acheminé par un malaxeur mobile sur le lieu d'utilisation et **en ce que** l'adjuvant entraineur d'air ou l'agent d'expansion est ajouté sous forme expansée au mélange seulement au dernier moment avant son utilisation sur place.

8. Procédé selon une des revendications précédentes 1 à 7, **caractérisé en ce que** les composants ajoutés sont dosés en volume.

9. Procédé selon une des revendications précédentes 1 à 8, **caractérisé en ce qu'**un mélangeur de force est utilisé et **en ce qu'**un système de contrôle maintient constant le temps de malaxage, la vitesse de rotation et les rapports entres les composants en fonction des doses spécifiées.

10. Procédé selon une des revendications précédentes 1 à 9, **caractérisé en ce que** le béton léger complètement mélangé est introduit dans des moules puis vibré de préférence pendant au maximum 15 secondes puis démoulé dès l'atteinte de sa résistance mécanique minimale spécifiée.

11. Procédé selon une des revendications précédentes 1 à 10, **caractérisé en ce que** le mélange est obtenu par un mélangeur tel une pompe à mortier en ajoutant l'adjuvant entraineur d'air ou l'agent d'expansion sous forme expansée juste en amont de l'ouverture de sortie de la pompe à mortier.

12. Procédé selon une des revendications précédentes 1 à 11, **caractérisé en ce que** le mortier du béton léger complètement mélangé est introduit dans un coffrage infini et en mouvement perpétuel et **en ce que** le mortier est coupé en amont d'une extrémité ou d'une courbe au moment oy le béton léger possède déjà une résistance mécanique minimale spécifiée puis enlevé et transporté.

13. Procédé selon une des revendications précédentes 1 à 12, **caractérisé en ce que** le mélange contient aucun composant ajouté tel le sable, la cendre, le laitier de haut fourneau, la cendre fine, le verre cellulaire, le verre expansé, le schiste expansé, l'argile expansée, le calcaire, la ponce de laitier de haut fourneau, la pierre ponce naturelle ou un autre composant similaire.

14. Procédé selon une des revendications précédentes 1 à 13 réalisé en mélangeant
- entre 50 1 et 350 1 d'eau, de préférence entre 80 1 et 250 1,
- entre 110 kg et 580 kg deciment, de préférence entre 180 kg et 560 kg,
- approximativement 0,9 kg à 2,1 kg de fluidifiant, de préférence 1,5 kg,
- entre 60 1 et 210 1 d'adjuvant entraineur d'air ou d'agent d'expansion, de préférence entre 100 1 et 150 1 sous forme de mousse et
- entre 0,3 kg et 1 kg de microfibres, de préférence entre 0,5 kg et 0,7 kg,
afin d'obtenir entre 1,2 m3 et 2,0 m3 de béton léger.

15. Procédé selon une des revendications précédentes 1 à 14 réalisé en mélangeant
- entre 50 1 et 350 1 d'eau, de préférence entre 80 1 et 250 1,
- entre 110 kg et 580 kg deciment, de préférence entre 180 kg et 560 kg,
- entre 420 1 et 1100 1 de polystyrène expansé granulaire, de préférence entre 700 1 et 800 l,
- approximativement 0,9 kg à 2,1 kg de fluidifiant, de préférence 1,5 kg,
- entre 60 1 et 210 1 d'adjuvant entraineur d'air ou d'agent d'expansion, de préférence entre 100 1 et 150 1 sous forme de mousse et
- entre 0,3 kg et 1 kg de microfibres, de préférence entre 0,5 kg et 0,7 kg,
afin d'obtenir entre 1,2 m3 et 2,0 m3 de béton léger.

16. Procédé selon une des revendications précédentes 1 à 15, **caractérisé en ce que** des fluidifiants á tels des sels de lignine et d'acide sulfonique et/ou des polymères sont ajoutés au mélange.

17. Procédé selon une des revendications précédentes 1 à 16, **caractérisé en ce que** le mélange contient des agents d'expansion tels des tensides et/ou des savons de résine et/ou des sulfonates et/ou des protéines.

18. Procédé selon une des revendications précédentes 1 à 17, **caractérisé en ce que** le polystyrène expansé possède une granulométrie comprise entre 0,5 mm et 7 mm et de préférence entre 1 mm et 5 mm.

19. Procédé selon une des revendications précédentes 1 à 18, **caractérisé en ce que** le ciment utilisé possède une résistance mécanique initiale élevée et de préférence plus élevée que celle du ciment de Portland du commerce.

20. Procédé selon une des revendications précédentes 1 à 19, **caractérisé en ce que** le ciment utilisé atteint très vite une haute résistance mécanique.

21. Procédé selon une des revendications précédentes 1 à 20, **caractérisé en ce que** les microfibres ajoutées au mélange sont des fibres en polypropylène (PP), des fibres en polyamide (PA), des fibres en polyéthylène (PE) et/ou des fibres de verre alcali-résistantes d'une longueur de fibre allant de 2 mm à 30 mm et de préférence de 3 mm à 5 mm.

22. Procédé selon une des revendications précédentes 1 à 21, **caractérisé en ce que** les microfibres utilisées possèdent une élasticité ou capacité d'extension telle qu'elles peuvent compenser le comportement de diminution et/ou d'augmentation de volume du béton léger.

23. Procédé selon une des revendications précédentes 1 à 22, **caractérisé en ce que** des fibres alcali-résistantes et/ou des fibres naturelles non biodégradables telles des fibres de jute, de bambou, de cocos et/ou des fibres d'acier sont des composants du mélange.

24. Procédé selon une des revendications précédentes 1 à 23, **caractérisé en ce que** du polystyrène de recyclage est ajouté au béton léger.
